# EUROPEAN PATENT APPLICATION

(11) **EP 4 513 451 A1**
(43) Date of publication of application: **26.02.2025**
(21) Application number: 23814811.8
(22) Date of filing: 19.04.2023
(51) Int. Cl.: G06V 20/62

(54) **DATA PROCESSING METHOD AND APPARATUS, AND DEVICE AND SYSTEM**

(30) Priority: 01.06.2022 CN 202210617439
(71) Applicant: Huawei Technologies Co., Ltd., Shenzhen, Guangdong 518129 (CN)
(72) Inventor: WEN, Yida, Shenzhen, Guangdong 518129 (CN); ZHU, Zhaoyang, Shenzhen, Guangdong 518129 (CN); SONG, Wenbing, Shenzhen, Guangdong 518129 (CN)
(74) Representative: MERH-IP Matias Erny Reichl Hoffmann Patentanwälte PartG mbB
(86) International application number: PCT/CN2023/089206
(87) International publication number: WO 2023/231625

(57) **Abstract**

This application provides a data processing method and apparatus, a device, and a system. The method includes: A terminal device obtains a target image captured by a first vision sensor, where the target image includes a tray character label and a plurality of ports on a splicing tray; determines a photographing posture of the first vision sensor based on a posture of the tray character label in the target image, and determines position information of each of the plurality of ports based on the photographing posture; determines a status of each of the plurality of ports based on image data of the plurality of ports in the target image; and sends the position information of each of the plurality of ports and the corresponding status of each port to a system background, so that the system background updates historical statuses of the plurality of ports based on the position information of the plurality of ports and the statuses of the plurality of ports. The method in this application facilitates management, operation, and maintenance of optical network resources, and improves efficiency of management, operation, and maintenance.

## Description

This application claims priority to Chinese Patent Application No. 202210617439.3, filed with the China National Intellectual Property Administration on June 1, 2022 and entitled "DATA PROCESSING METHOD AND APPARATUS, DEVICE, AND SYSTEM", which is incorporated herein by reference in its entirety.

### TECHNICAL FIELD

This application relates to the field of optical networks, and in particular, to a data processing method and apparatus, a device, and a system.

### BACKGROUND

A system background records information about basic network resources such as an optical distribution frame (optical distribution frame, ODF), an optical cable cross-connect cabinet (optical cable cross-connect cabinet), and an optical fiber patch cord, for example, status information of each port on a splicing tray in the optical distribution frame or the optical cable cross-connect cabinet, and a connection relationship between the optical fiber patch cord and each port of the splicing tray.

However, with the rapid development of optical networks, problems on operation, maintenance, and management of the optical networks become obvious. In a conventional method for network resource management, operation and maintenance, the status information of each port or the connection relationship between the optical fiber patch cord and the port needs to be checked and verified manually one by one based on the information recorded in the system background. This method requires consumption of too many human resources and has low efficiency for an entire optical network.

### SUMMARY

This application provides a data processing method and apparatus, a device, and a system. According to the method described in this application, a status of each port on a splicing tray and a connection relationship between an optical fiber patch cord and a port are determined. This facilitates operation, improves efficiency, and facilitates management, operation, and maintenance of an optical network.

According to a first aspect, this application provides a data processing method, including: A terminal device obtains a target image captured by a first vision sensor, where the target image includes a tray character label and a plurality of ports on a splicing tray; determines a photographing posture of the first vision sensor based on a posture of the tray character label in the target image, and determines position information of each of the plurality of ports based on the photographing posture; determines a status of each of the plurality of ports based on image data of the plurality of ports in the target image; and sends the position information of each of the plurality of ports and the corresponding status of each port to a system background, so that the system background updates historical statuses of the plurality of ports based on the position information of the plurality of ports and the statuses of the plurality of ports.

It can be learned that, in this application, the target image is captured, the target image includes the image data of the plurality of ports on the splicing tray, and then the target image is processed, to determine the statuses of the plurality of ports on the splicing tray. The statuses of the ports on the splicing tray are determined without one-by-one manual check on the splicing tray. The statuses of the ports on the splicing tray are determined according to the method in this application, to facilitate operations, improves efficiency, and facilitates subsequent management, operation, and maintenance of the statuses of the ports on the splicing tray.

In an application scenario related to this application, the tray character label is disposed on the splicing tray, the photographing posture of the first vision sensor is determined based on the posture of the tray character label, and then the position information of each port on the splicing tray is determined based on the photographing posture of the first vision sensor. This helps accurately determine the position information of each port, and reduces a photographing requirement.

According to the first aspect, in a possible implementation, the photographing posture includes a photographing height, a photographing distance, and a photographing direction of the first vision sensor, and the posture of the tray character label includes at least a position, a size, and a shape of the tray character label.

It may be understood that the photographing height, the photographing distance, and the photographing direction of the first vision sensor all affect the target image. Specifically, the photographing height, the photographing distance, and the photographing direction of the first vision sensor affect image data of the tray character label in the target image, and impact on the tray character label is reflected in position, size, shape, and the like of the tray character label.

According to the first aspect, in a possible implementation, the determining statuses of the plurality of ports in the target image based on image data of the plurality of ports in the target image includes: inputting the target image into a trained prediction model, to obtain the statuses of the plurality of ports, where the prediction model is obtained through training based on a large quantity of image samples, the image sample includes at least one port and a label of each of the at least one port, and the label is used to mask a status of the port.

It may be understood that the prediction model may be obtained through artificial intelligence AI training, and the prediction model is used to predict a status of each port. The target image is input into the prediction model, so that the status of each port in the target image can be accurately determined.

According to the first aspect, in a possible implementation, the plurality of ports include any one or a combination of ports included in one or more rows on the splicing tray, ports included in one or more columns on the splicing tray, and all ports on the splicing tray.

According to the first aspect, in a possible implementation, the status of each port in the plurality ports includes an idle state, an occupied state, and an unavailable state. The unavailable state of the port means that a flange that is of the port and that is configured to connect to an optical fiber patch cord falls off, the idle state of the port means that the flange of the port does not fall off and is not connected to the optical fiber patch cord, and the occupied state of the port means that the flange of the port is connected to the optical fiber patch cord.

According to the first aspect, in a possible implementation, identification information is set at both ends of the optical fiber patch cord, and a correspondence exists between the identification information at both ends of the same optical fiber patch cord; and when a port in an occupied state exists in the plurality of ports, the target image includes identification information of one end or both ends of an optical fiber patch cord connected to the port in the occupied state. After the determining a status of each of the plurality of ports, the method further includes: sending, to the system background, position information of the port in the occupied state in the plurality of ports and the identification information of the end of the optical fiber patch cord connected to the port in the occupied state, so that the system background determines a connection relationship between the optical fiber patch cord and the port based on a pre-stored correspondence between the identification information.

It can be learned that, in this application, identification information is separately set at two ends of an optical fiber patch cord, and a correspondence exists between the identification information at the two ends of each optical fiber patch cord. The terminal device determines, based on the target image, the position information of the port connected to the optical fiber patch cord, and sends the position information and the identification information of the end of the optical fiber patch cord connected to the port to the system background. The system background determines the correspondence between each optical fiber patch cord and the connected port based on the position information of the port connected to the optical fiber patch cord, the identification information of the end of the optical fiber patch cord, and the pre-stored correspondence between the identification information. According to the method in this application, the connection relationship between each optical fiber patch cord and the port on the splicing tray is determined. This facilitates operations, improves working efficiency, and facilitates subsequent operation and maintenance of an optical network.

According to the first aspect, in a possible implementation, the identification information includes any one or a combination of a two-dimensional code, a bar code, a specific character, and a specific pattern.

According to the first aspect, in a possible implementation, the sending, to the system background, position information of the port in the occupied state in the plurality of ports and the identification information of the end of the optical fiber patch cord connected to the port in the occupied state includes: identifying the identification information of the end of the optical fiber patch cord connected to the port in the occupied state, to obtain an identification result; and sending the position information of the port in the occupied state and the identification result to the system background, so that the system background determines the connection relationship between the optical fiber patch cord and the port based on the pre-stored correspondence between the identification information.

It may be understood that, when the identification information is a two-dimensional code or a bar code, the two-dimensional code or the bar code may be identified first to obtain the identification result, and the terminal device sends, to the system background, the position information of the port connected to the optical fiber patch cord and the identification result of the identification information on the optical fiber patch cord connected to the port.

According to the first aspect, in a possible implementation, a mechanical part is disposed on the optical fiber patch cord, and the mechanical part is marked with the identification information.

According to the first aspect, in a possible implementation, the mechanical part is plugged into a port of the optical fiber patch cord, and the optical fiber patch cord is plugged into the port of the splicing tray through the mechanical part.

It may be understood that, in a plug-in manner, the optical fiber patch cord is plugged into the mechanical part, and then is plugged into the port through the mechanical part. This facilitates operations.

According to a second aspect, this application provides a data processing apparatus, including:
an obtaining unit, configured to obtain a target image captured by a first vision sensor, where the target image includes a tray character label and a plurality of ports on a splicing tray;
a determining unit, configured to: determine a photographing posture of the first vision sensor based on a posture of the tray character label in the target image, and determine position information of each of the plurality of ports based on the photographing posture;
the determining unit, further configured to determine a status of each of the plurality of ports based on image data of the plurality of ports in the target image; and
a communication unit, configured to send the position information of each of the plurality of ports and the corresponding status of each port to a system background, so that the system background updates historical statuses of the plurality of ports based on the position information of the plurality of ports and the statuses of the plurality of ports.

According to the second aspect, in a possible implementation, the photographing posture includes a photographing height, a photographing distance, and a photographing direction of the first vision sensor, and the posture of the tray character label includes at least a position, a size, and a shape of the tray character label.

According to the second aspect, in a possible implementation, determining unit is configured to input the target image into a trained prediction model, to obtain the statuses of the plurality of ports, where the prediction model is obtained through training based on a large quantity of image samples, the image sample includes at least one port and a label of each of the at least one port, and the label is used to mark a status of the port.

According to the second aspect, in a possible implementation, the plurality of ports include any one or a combination of ports included in one or more rows on the splicing tray, ports included in one or more columns on the splicing tray, and all ports on the splicing tray.

According to the second aspect, in a possible implementation, the status of each port in the plurality ports includes an idle state, an occupied state, and an unavailable state. The unavailable state of the port means that a flange that is of the port and that is configured to connect to an optical fiber patch cord falls off, the idle state of the port means that the flange of the port does not fall off and is not connected to the optical fiber patch cord, and the occupied state of the port means that the flange of the port is connected to the optical fiber patch cord.

According to the second aspect, in a possible implementation, identification information is set at both ends of the optical fiber patch cord, and a correspondence exists between the identification information at both ends of the same optical fiber patch cord; and when a port in an occupied state exists in the plurality of ports, the target image includes identification information of one end or both ends of an optical fiber patch cord connected to the port in the occupied state. The communication unit is further configured to: send, to the system background, position information of the port in the occupied state in the plurality of ports and the identification information of the end of the optical fiber patch cord connected to the port in the occupied state, so that the system background determines a connection relationship between the optical fiber patch cord and the port based on a pre-stored correspondence between the identification information.

According to the second aspect, in a possible implementation, the identification information includes any one or a combination of a two-dimensional code, a bar code, a specific character, and a specific pattern.

According to the second aspect, in a possible implementation, the apparatus further includes an identification unit.

The identification unit is configured to identify the identification information of the end of the optical fiber patch cord connected to the port in the occupied state, to obtain an identification result.

The communication unit is configured to send the position information of the port in the occupied state and the identification result to the system background, so that the system background determines the connection relationship between the optical fiber patch cord and the port based on the pre-stored correspondence between the identification information.

The functional units in the second aspect are configured to implement the method according to the first aspect or any one of the possible implementations of the first aspect.

According to a third aspect, this application provides a terminal device, including a memory and a processor. The memory is configured to store instructions, and the processor is configured to invoke the instructions stored in the memory to perform the method according to the first aspect or any one of the possible implementations of the first aspect.

According to a fourth aspect, this application provides a system, including a terminal device and a system background. The terminal device is the terminal device according to the second aspect or any one of the possible implementations of the second aspect.

According to a fifth aspect, this application provides a computer storage medium, including program instructions. When the program instructions are run on a computer, the computer is enabled to perform the method according to the first aspect or any one of the possible implementations of the first aspect.

According to a sixth aspect, this application provides a computer program product, including program instructions. When the computer program product is executed by a terminal device, the terminal device performs the method according to the first aspect. The computer program product may be a software installation package. When the method provided in any one of the possible implementations of the first aspect needs to be used, the computer program product may be downloaded and executed on a terminal device, to implement the method according to the first aspect or any one of the possible implementations of the first aspect.

### BRIEF DESCRIPTION OF DRAWINGS

FIG. 1 is a diagram of an architecture of a system according to this application;
FIG. 2 is a schematic flowchart of a data processing method according to this application;
FIG. 3 is a diagram of an example scenario according to this application;
FIG. 4 is a schematic flowchart of another data processing method according to this application;
FIG. 5 is a diagram of an example scenario according to this application;
FIG. 6 is a schematic flowchart of another data processing method according to this application;
FIG. 7 is a diagram of a structure of a data processing apparatus according to this application; and
FIG. 8 is a diagram of a structure of a terminal device according to this application.

### DESCRIPTION OF EMBODIMENTS

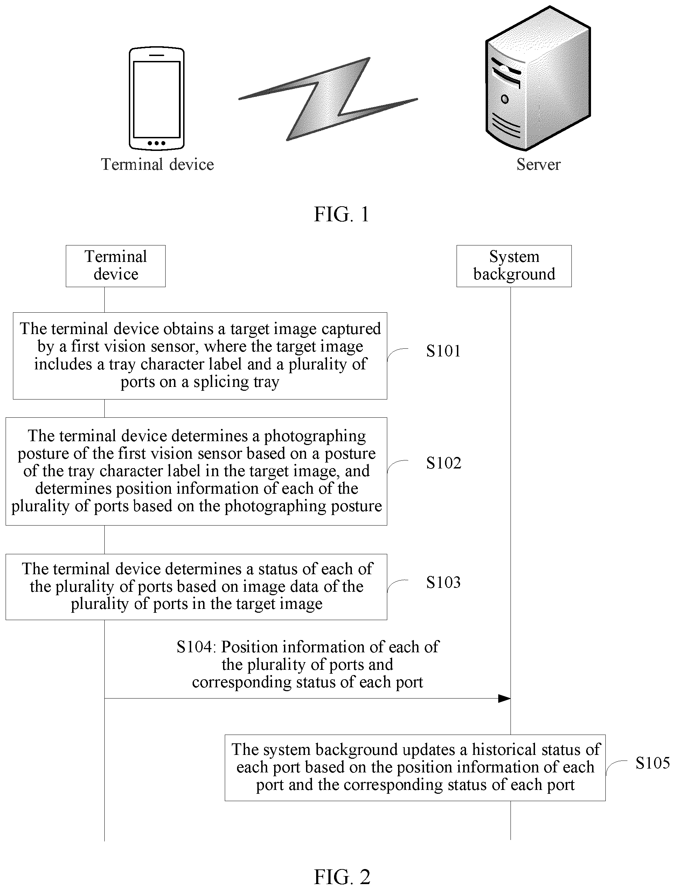

FIG. 1 is a diagram of an architecture of a system according to this application. The system relates to a terminal device and a server.

The terminal device is configured to capture an image or a video of a splicing tray in an optical distribution frame or an optical cable cross-connect cabinet. The image or each video frame may include some ports on the splicing tray, for example, one or more rows of ports on the splicing tray, or one or more columns of ports on the splicing tray, or may include all ports on the splicing tray. A quantity of ports included in the image or video frame is not limited in this application, and a photographing posture of the image or video is not limited. In this application, the terminal device may be, for example, a mobile phone or a tablet computer, or may be a portable wearable device that has an image capture function.

The terminal device is further configured to process the captured image or video. For example, in this application, the terminal device determines a status of each port based on image data of each port in the image or video. The status of the port includes an unavailable state, an idle state, and an occupied state. The unavailable state of the port means that the port is damaged. The idle state of the port means that the port is not damaged and no optical fiber patch cord is connected to the port. The occupied state of the port means that the port is not damaged and an optical fiber patch cord is connected to the port. For another example, when it is determined that a port is in an occupied state, the terminal device determines, based on image data of the port in the occupied state in the image or video, which optical fiber patch cord occupies the port.

The terminal device is further configured to send a processing result to the server. For example, the terminal device sends a determined status of each port to the server. For another example, the terminal device sends a determined correspondence between each port in an occupied state and an optical fiber patch cord to the server. Optionally, the terminal device may send the processing result to the server in a wired communication manner or a wireless communication manner.

The server is configured to receive the processing result sent by the terminal device, and perform subsequent processing based on the processing result. In this application, a system background is installed on the server. The server may update a historical status of each port on the system background based on the status of each port sent by the terminal device. The server may further determine a correspondence between a local optical fiber patch cord, a peer optical fiber patch cord, and optical path information based on the correspondence that is between each port in an occupied state and an optical fiber patch cord and that is sent by the terminal device.

Based on the foregoing system architecture, this application provides a data processing method. FIG. 2 is a schematic flowchart of a data processing method according to this application. The method includes but is not limited to descriptions of the following content.

S101: A terminal device obtains a target image captured by a first vision sensor, where the target image includes a tray character label and a plurality of ports on a splicing tray.

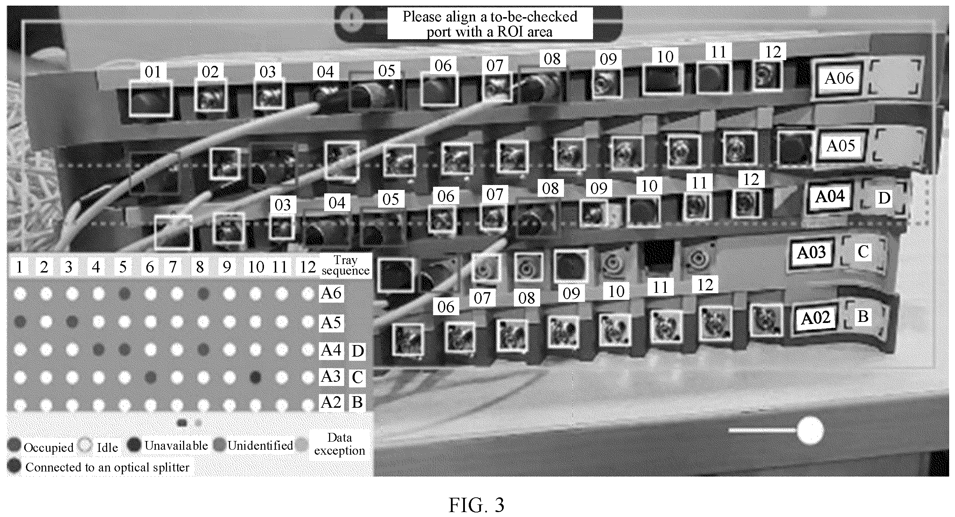

The splicing tray includes a plurality of ports, and the plurality of ports may be arranged regularly or irregularly. For example, the plurality of ports may be arranged in a form of a plurality of rows. Quantities of ports in all rows may be the same or may be different, and ports in all rows may be aligned or may not be aligned in a column direction. For example, refer to FIG. 3. FIG. 3 is a diagram according to this application. The splicing tray includes a plurality of ports. It may be considered that the plurality of ports are arranged in a form of a plurality of rows, and the plurality of ports are not aligned in a column direction. The plurality of ports may alternatively be arranged in a form of a plurality of columns. Quantities of ports in all columns may be the same or may be different, and ports in all columns may be aligned or may not be aligned in a row direction. The plurality of ports on the splicing tray may alternatively be arranged in a manner of unaligned in both a row direction and a column direction. An arrangement manner of the ports on the splicing tray is not specifically limited in this application.

The splicing tray may be a splicing tray in the optical distribution frame, or may be a splicing tray in the optical cable cross-connect cabinet, or may be a splicing tray in another device. This is not limited in this application.

A tray character label is disposed on the splicing tray, and the tray character label refers to a label on the splicing tray. The tray character label may be used to identify position information of each port of the splicing tray. A position of each port may be determined based on the tray character label. The tray character label may be, for example, a row label and/or a column label on the splicing tray. For example, in the example of FIG. 3, ports in the rows are aligned in a row direction. Therefore, the row label may be set as a tray character label. In FIG. 3, row labels include A02, A03, A04, A05, and A06. A row label is used to identify a row position of each port. In addition, in the example of FIG. 3, row spacings between ports in each row are equal or approximately equal. A column position of a port may be determined based on a distance between the port and a row label of a row in which the port is located. In other words, the column position is a specific port (which may be calculated from left to right or from right to left) in the row. A row label may be located on a left side position of a row in which the row label is located, or may be located on a right side position of the row in which the row label is located, or a column label may be located on an upper side position of a column in which the column label is located, or may be located on a lower side position of the column in which the column label is located. A position of the tray character label is not specifically limited in this application. In this application, the tray character label including the row label and/or the column label is merely used as an example. The tray character label may alternatively be another form of label used to identify position information of each port. This is not limited in this application.

The target image includes the plurality of ports on the splicing tray. The plurality of ports may be ports included in one row of the splicing tray, or may be ports included in a plurality of rows of the splicing tray, or may be ports included in one column of the splicing tray, or may be ports included in a plurality of columns of the splicing tray, or may be all ports on the splicing tray. In other words, the target image may be obtained by photographing one or more rows of ports on the splicing tray, or may be obtained by photographing one or more columns of ports on the splicing tray, or may be obtained by photographing all ports on the splicing tray.

The target image includes the tray character label. Optionally, the target image may include a row label of one row or row labels of a plurality of rows, or the target image includes a column label of one column or column labels of a plurality of columns. For example, if the target image is obtained by photographing ports in one row on the splicing tray, the target image should include a row label of the row during photographing; if the target image is obtained by photographing ports in a plurality of rows on the splicing tray, the target image should include row labels of the plurality of rows during photographing; if the target image is obtained by photographing ports in one column on the splicing tray, the target image should include a column label of the column during photographing; if the target image is obtained by photographing ports in a plurality of columns on the splicing tray, the target image should include column labels of the plurality of columns during photographing; or if the target image is obtained by photographing all ports on the splicing tray, the target image should include all tray character labels on the splicing tray during photographing.

In this application, the target image may be one or more images, or may be one or more video frames. In other words, the first vision sensor may capture one or more images, or a video. If the first vision sensor captures a video, the target image may include one or more video frames, and at least one of the one or more video frames includes a tray character label and a plurality of ports on the splicing tray. For example, the target image includes all video frames in the video, and at least one video frame in all the video frames includes a tray character label and a plurality of ports on the splicing tray.

The target image may be obtained through photographing by the first vision sensor in any photographing posture, where the photographing posture includes a photographing height, a photographing distance, and a photographing direction. The photographing height is a photographing height of the first vision sensor, and the photographing height may use a horizontal ground as a reference object, or may use another object as a reference object. The photographing distance is a distance between the first vision sensor and the splicing tray. Optionally, a distance between a specific point on the first vision sensor and a specific point on the splicing tray may be used as the photographing distance. For example, a distance between a center of the first vision sensor and a center of the splicing tray is used as the photographing distance, or a distance between another specific point on the first vision sensor and another specific point on the splicing tray may be used as the photographing distance. This is not limited in this application.

The photographing direction means to select a photographing point around a photographed object on a same horizontal plane with the photographed object as a center. When the photographing distance and the photographing height remain unchanged, different photographing directions may present different side images of the photographed object. In a case in which an environment remains unchanged, when the photographing distance and the photographing height remain unchanged, images or videos of the photographed object obtained through photographing in different photographing directions are different. For example, in some photographing directions, colors of the photographed object in obtained images or videos are relatively bright, and in some photographing directions, colors of the photographed object in obtained images or videos are relatively dark. In different photographing directions, zoom ratios or deformations of different parts of the photographed object in the obtained images or videos are different. In this application, the first vision sensor photographs the plurality of ports on the splicing tray in different photographing directions, and images of the plurality of ports in the obtained target images are also different.

For example, when the first vision sensor photographs the plurality of ports on the splicing tray, the first vision sensor may perform photographing at a front angle, that is, the first vision sensor and the splicing tray are spaced at a specific distance, and perform photographing in a posture parallel to the splicing tray. Alternatively, the first vision sensor may perform photographing at a non-front angle, that is, not in a posture parallel to the splicing tray, and photograph the splicing tray at a specific tilt angle. The specific tilt angle means that the first vision sensor has a specific tilt angle relative to a plane parallel to the splicing tray. For an angle of the first vision sensor, the tilt angle may be any one or a combination of a depression angle, an elevation angle, a left tilt angle, and a right tilt angle.

The terminal device may be any terminal device described in the system in FIG. 1, and has a function of the terminal device in the system in FIG. 1.

The first vision sensor may be located in the terminal device, and the terminal device controls the first vision sensor to capture the target image. For example, the terminal device may be a mobile phone or a tablet computer, and the first vision sensor may be a camera on the mobile phone or the tablet computer. Alternatively, the first vision sensor may not be located on the terminal device. For example, the first vision sensor may be a camera machine, and the terminal device may be a mobile phone or a tablet computer. After the first vision sensor captures the target image, the terminal device obtains the target image captured by the first vision sensor in a wired or wireless manner. The obtaining manner is not limited in this application.

S102: The terminal device determines a photographing posture of the first vision sensor based on a posture of the tray character label in the target image, and determines position information of each of the plurality of ports based on the photographing posture.

The posture of the tray character label includes at least a position, a size, and a shape of the tray character label. Postures of the tray character label in the target image are different based on different photographing postures of the first vision sensor. The photographing posture of the first vision sensor includes a photographing height, a photographing distance, and a photographing direction. For example, when the first vision sensor is far from the splicing tray, that is, when the photographing distance is large, an image of the tray character label in the target image is small. When the first vision sensor is close to the splicing tray, that is, when the photographing distance is small, an image of the tray character label in the target image is large. For another example, when the first vision sensor performs photographing in different photographing directions or at different photographing heights, images of the tray character label in the target image are also different, and postures of the tray character label are different. When the first vision sensor performs photographing at a front angle, an image of the tray character label in the target image has no deformation. When the first vision sensor performs photographing at a non-front angle, an image of the tray character label in the target image has a deformation, and a larger tilt angle of the first vision sensor indicates a larger image deformation of the tray character label in the target image. For example, if the tray character label on the splicing tray is rectangular, when photographing is performed at a specific tilt angle, the tray character label in the target image may be in a parallelogram; or when photographing is performed at a specific photographing height or in a specific photographing direction, the tray character label in the target image may be in a trapezoid.

The photographing posture of the first vision sensor may be determined by performing calculation based on the posture of the tray character label in the target image by using an algorithm. Optionally, the photographing posture of the first vision sensor may be represented by a vector. A photographing posture vector of the first vision sensor may be calculated based on the posture of the tray character label in the target image. The photographing distance, the photographing height, and the photographing direction may also be obtained based on the photographing posture vector. A method for determining the photographing posture of the first vision sensor based on the posture of the tray character label in the target image is not limited in this application.

Optionally, when the first vision sensor is located on the terminal device, the terminal device may capture the target image by using the first vision sensor and determine the photographing posture of the first vision sensor based on the posture of the tray character label in the target image in an interleaving manner, and when the photographing posture of the first vision sensor does not meet a preset condition, the terminal device provides a prompt of adjusting the photographing posture. For example, the terminal device captures an image or a video of the splicing tray, and the terminal device processes the obtained image or video, determines a photographing posture of the first vision sensor based on a posture of a tray character label in the obtained image or video, and when the photographing posture of the first vision sensor does not meet the preset condition, provides a prompt about how to adjust the photographing posture, for example, "the photographing distance is excessively long, and please adjust the photographing distance"; "the photographing height is excessively high, and please adjust the photographing height"; and "the photographing direction is excessively tilted, and please adjust the photographing direction". After adjusting the photographing posture, the terminal device captures an image or a video of the splicing tray again.

The preset condition is to impose a constraint on the photographing posture of the first vision sensor, for example, impose a constraint on one or more of the photographing height, the photographing distance, and the photographing direction. When the photographing distance is excessively large, an image of the tray character label or an image of the port in the target image is prone to be excessively small, or the target image is blurred, or detailed information is unclear. Therefore, a range of the photographing distance may be limited. For example, the photographing distance cannot exceed a threshold, or the photographing distance should be within a range between a threshold and another threshold. The photographing height and the photographing direction may affect a deformation degree of the tray character label in the target image. An excessive deformation causes difficulty in subsequent image processing, for example, difficulty in determining a photographing posture based on a posture of the tray character label in the target image. Therefore, constraints are imposed on the photographing height and the photographing direction, to facilitate subsequent image processing.

Optionally, before the photographing posture of the first vision sensor is determined, the target image may be preprocessed first. For example, the preprocessing includes image enhancement, that is, image enhancement is performed on the tray character label and each port in the target image, so that the image is clearer. The preprocessing may alternatively be another operation, for example, image denoising. The preprocessing operation is not limited in this application.

The determining position information of each of the plurality of ports based on the photographing posture includes determining a row position and a column position of each port. In an example, ports on the splicing tray are aligned in a row direction and a column direction, that is, the ports may be considered to be arranged in a form of a square array. A row label and a column label are disposed on the splicing tray. In this case, row position information and column position information of each port are determined based on a row label, a column label, and a photographing posture (or a photographing posture vector) in the target image. In an example, ports on the splicing tray are aligned in a row direction, and a row label is disposed on the splicing tray. As shown in FIG. 3, distances between adjacent ports in each row are equal or approximately equal. Column position information is determined based on a photographing posture and a distance between a port and a row label of a row in which the port is located, and row position information of each port may be determined based on the row label and the photographing posture. Assuming that a distance between adjacent ports in each row on the splicing tray is d, a specific column in which a port in a row is located may be obtained through calculation based on a distance between the port and a row label of the row in which the port is located, a photographing posture, and d. A specific algorithm is not limited in this application.

S103: The terminal device determines a status of each of the plurality of ports based on image data of the plurality of ports in the target image.

The status of the port includes an idle state, an occupied state, and an unavailable state. That the port is in the unavailable state means that a flange that is of the port and that is configured to connect to an optical fiber patch cord falls off, where the flange refers to a metal body configured to connect to the optical fiber patch cord. That the port is in the occupied state means that the flange of the port is connected to the optical fiber patch cord. That the port is in the idle state means that the flange that is of the port and that is configured to connect to the optical fiber patch cord does not fall off and is not connected to the optical fiber patch cord. For example, in the example shown in FIG. 3, flanges that are configured to connect to optical fiber patch cords and that are of the 1^{st} port, the 3^{rd} port, the 5^{th} port, and the 6^{th} port that are counted from right to left in the row A03 fall off, and these ports are in an unavailable state; the 5^{th} port counted from right to left in the row A04, and the 5^{th} port and the 8^{th} port counted from right to left in the row A06 are all connected to optical fiber patch cords, and these ports are in an occupied state; and flanges of the 1^{st} port to the 8^{th} port counted from right to left in the row A02, and the 1^{st} port and the 2^{nd} port counted from right to left in the row A04 do not fall off and are not connected to optical fiber patch cords, and all these ports are in an idle state. FIG. 3 herein is merely used as an example, and does not constitute a limitation on this application.

The status of each of the plurality of ports is determined based on the image data of the plurality of ports in the target image. Optionally, the target image may be input into a trained first prediction model (the first prediction model corresponds to the prediction model in the claims), to obtain a status of each of the plurality of ports. The first prediction model is obtained through training based on a large quantity of image samples, each image sample includes at least one port and a label of each of the at least one port, and the label of each port is used to mark a status of the port. The trained first prediction model may be used to predict a status of each port. A specific training method used for the first prediction model is not limited in this application.

Optionally, in this embodiment, there is no sequence between step S102 and step S103. Step S103 may be performed before step S102. This is not limited in this application.

S104: The terminal device sends the position information of each of the plurality of ports and the corresponding status of each port to a system background.

Optionally, the system background may be located on the server in the system in FIG. 1.

S105: The system background updates a historical status of each port based on the position information of each port and the corresponding status of each port.

The terminal device sends the position information of each port in the target image and the corresponding status of each port to the system background. The system background stores the position information of each port and the historical status of each port. After receiving the status of each port sent by the terminal device, the system background updates the historical status based on the status of each port sent by the terminal device.

Optionally, the historical status of each port may be updated according to an on-site result respecting principle. For example, refer to Table 1.

**Table 1**

| | | Historical status of a port in a system background | | |
|---|---|---|---|---|
| | | Idle state | Occupied state | Unavailable state |
| Status of the port determined based on a target image | Idle state | Consistent, and unchanged | The status in the system background is updated to an idle state, and the historical status is temporarily stored in a database | Inconsistent, and unchanged |
| | Occupied state | The status in the system background is updated to an occupied state, and the historical status is temporarily stored in the database | Consistent, and unchanged | The status in the system background is updated to an occupied state, and the historical status is temporarily stored in the database |
| | Unavailable state | The status in the system background is updated to an unavailable state | The status in the system background is updated to an unavailable state, and the historical status is temporarily stored in the database | Consistent, and unchanged |

In Table 1, when the status of the port determined based on the target image is consistent with the historical status of the port stored in the system background, the status of the port in the system background remains unchanged, for example, both are in an idle state, both are in an occupied state, or both are in an unavailable state. When the status of the port determined based on the target image is inconsistent with the historical status of the port stored in the system background, the status in the system background is updated to the status of the port determined based on the target image, and the historical status of the port and related information is temporarily stored in the database. An error correction person may be dispatched to the site to check the related information, for example, historical optical path information. Optionally, when the status of the port determined based on the target image is the idle state, and the historical status stored in the system background is the unavailable state, the historical status in the system background may remain unchanged. Because the idle state is determined based on an appearance of the port to determine whether the port is undamaged, and whether a determining result is applicable is unknown in practice, and needs to be determined through measurement. That the historical status is the unavailable state indicates that the port may be unavailable. Therefore, in this case, keep the historical status in the system background unchanged.

It can be learned that this application provides a data processing method. The terminal device captures the target image, where the target image includes the tray character label and the plurality of ports on the splicing tray. The terminal device determines position information of each port in the target image based on the posture of the tray character label, then determines the status of each port based on the image data of the plurality of ports, further sends the position information of each port and the corresponding status of each port to the system background, and updates the historical status of each port. The method in this application facilitates management, operation, and maintenance of optical network resources, saves human resources, and improves efficiency of management, operation, and maintenance.

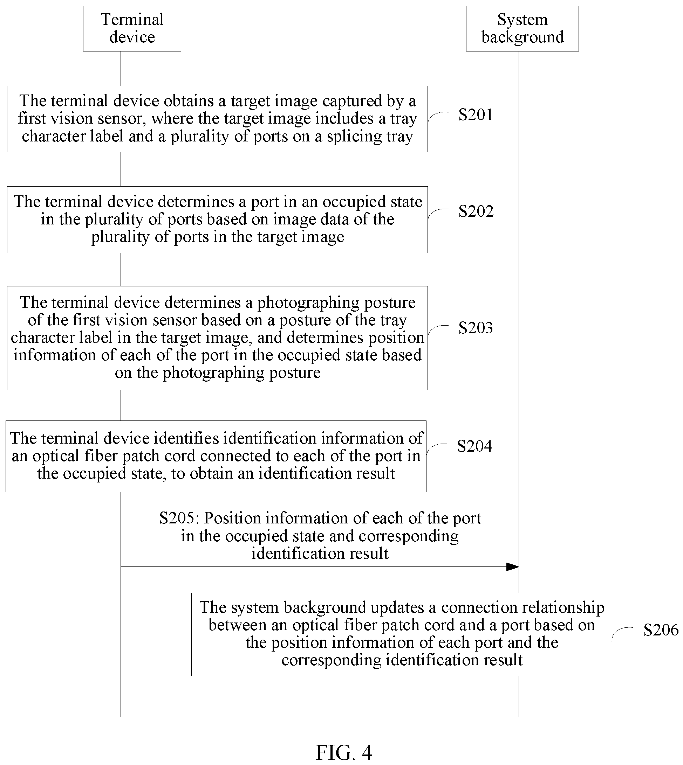

This application further provides a data processing method. FIG. 4 is a schematic flowchart of a data processing method according to this application. The method includes but is not limited to descriptions of the following content.

S201: A terminal device obtains a target image captured by a first vision sensor, where the target image includes a tray character label and a plurality of ports on a splicing tray.

For this step, refer to the descriptions of content in step S101 in the embodiment in FIG. 2. For brevity of this specification, details are not described herein again.

It should be noted that, in this embodiment, if some of the plurality of ports on the splicing tray are connected to optical fiber patch cords, it may be understood that these ports are in an occupied state. Identification information is set at both ends of the optical fiber patch cord, and a correspondence exists between the identification information at both ends of each optical fiber patch cord. The identification information may be, for example, any one or a combination of a two-dimensional code, a bar code, a specific character, or a specific pattern. The specific character may be, for example, A1, A2, B1, or B2, or may be &1, &2, *1, or *2. A specific form of the identification information is not limited in this application.

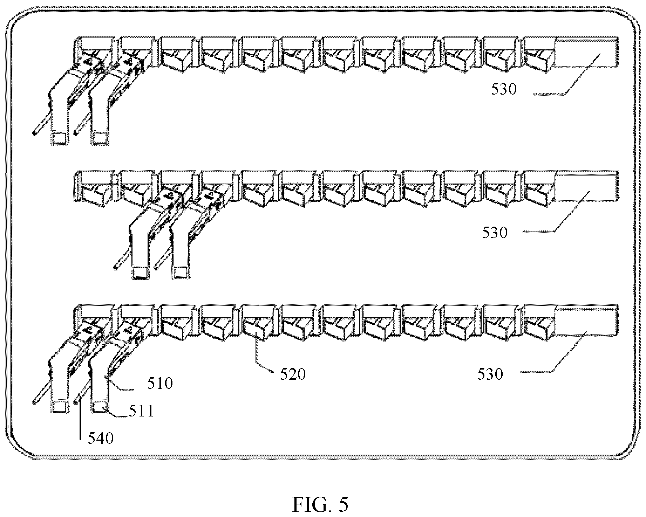

It should be noted that the identification information is set before delivery, and the correspondence between the identification information is also determined before delivery and pre-stored in a system background. For example, if identification information A1 corresponds to identification information A2, and identification information on one end of an optical fiber patch cord is A1, identification information on the other end of the optical fiber patch cord is A2. If identification information &1 corresponds to identification information &2, and identification information on one end of an optical fiber patch cord is &1, identification information on the other end of the optical fiber patch cord is &2. Similarly, if identification information is a two-dimensional code, a bar code, a specific pattern, or the like, a correspondence also exists between identification information at both ends of an optical fiber patch cord. Optionally, the optical fiber patch cord is connected to the port through a mechanical part, where the mechanical part is marked with identification information. Specifically, the mechanical part is plugged into a port of the optical fiber patch cord, and the optical fiber patch cord is plugged into the port of the splicing tray through the mechanical part. FIG. 5 is a diagram of an example according to this application. In FIG. 5, 510 is a mechanical part, 511 is identification information on the mechanical part, 540 is an optical fiber patch cord, 520 is a port of a splicing tray, 530 is a row label, a first end of the mechanical part 510 is configured to be plugged into the optical fiber patch cord 540, the optical fiber patch cord 540 is plugged into the port 520 of the splicing tray through the first end of the mechanical part 510, and a second end of the mechanical part 510 is marked with the identification information 511, the identification information 511 may be two-dimensional code information, and the identification information may alternatively be other information. It should be noted that, for ease of viewing, only three rows of ports are provided in the example in FIG. 5. In practice, the splicing tray may include more or fewer ports. A structure and a form of the mechanical part in FIG. 5 are merely an example, and a specific structure and form of the mechanical part may alternatively be another form. This is not limited in this application.

It should be noted that, in this embodiment, if a port is connected to an optical fiber patch cord, identification information is definitely set at two ends of the optical fiber patch cord, and the target image includes identification information of at least one end of the optical fiber patch cord. In the embodiment in FIG. 2, some ports of the plurality of ports on the splicing tray are connected to optical fiber patch cords, that is, some ports are in an occupied state. The method embodiment in FIG. 2 does not limit a manner for the optical fiber patch cords to connect to the ports. The optical fiber patch cords may be connected to the ports through mechanical parts, or may be directly connected to the ports. In the method embodiment in FIG. 2, only whether the optical fiber patch cords are connected to the ports and whether the ports are damaged are described, and whether identification information is set on the optical fiber patch cords is not limited.

S202: The terminal device determines a port in an occupied state in the plurality of ports based on image data of the plurality of ports in the target image.

In an implementation, a status of each of the plurality of ports may be first determined based on the image data of the plurality of ports in the target image, where the status of each port includes an occupied state, an idle state, and an unavailable state, and then the port in the occupied state is screened out. For the occupied state, the idle state, the unavailable state, and the manner for determining the status of each of the plurality of ports, refer to the descriptions of the content in step S103 in the embodiment in FIG. 2.

In an implementation, the target image is input into a second prediction model, to obtain the port in the occupied state in the plurality of ports. The second prediction model is obtained through training based on a large quantity of image samples, and each image sample includes at least one port in an occupied state. The target image is input into the second prediction model, and the second prediction model identifies each port in the target image, to identify the port in the occupied state. A specific training method used for the second prediction model is not limited in this application.

S203: The terminal device determines a photographing posture of the first vision sensor based on a posture of the tray character label in the target image, and determines position information of each of the port in the occupied state based on the photographing posture.

For determining the photographing posture of the first vision sensor based on the posture of the tray character label in the target image, and determining the position information of each of the port in the occupied state based on the photographing posture, refer to the descriptions of the content in step S102 in the method embodiment in FIG. 2. For brevity of this specification, details are not described herein again.

S204: The terminal device identifies identification information of an optical fiber patch cord connected to each of the port in the occupied state, to obtain an identification result.

S205: The terminal device sends the position information of each of the port in the occupied state and the corresponding identification result to the system background.

In an implementation, the identification information may be a two-dimensional code, a bar code, a specific pattern, or the like. The terminal device identifies the identification information to obtain the identification result. The identification result may be a "code or name" of an optical fiber patch cord represented by the identification information, for example, the identification result may be A1, A2, &1, &2, *1, *2, or the like. The position information of each port in the occupied state and the identification result of the corresponding identification information to the system background.

Optionally, in an implementation, if the identification information may be in a form of A1, A2, &1, &2, *1, *2, or the like, the identification information does not need to be identified, and the terminal device may directly send the position information of each port in the occupied state and the corresponding identification information to the system background.

S206: The system background updates a connection relationship between the optical fiber patch cord and the port based on the position information of each port and the corresponding identification result.

The system background receives the position information of each port in the occupied state and the corresponding identification result sent by the terminal device.

The correspondence between identification information is pre-stored in the system background. For example, A1 corresponds to A2, B1 corresponds to B2, &1 corresponds to &2, and *1 corresponds to *2. The system background stores historical information, and the historical information includes the connection relationship between the optical fiber patch cord and the port. The system background may determine information about each port based on the received position information of each port in the occupied state, and check the connection relationship between the optical fiber patch cord and the port in the historical information based on each port, the corresponding identification result, and the pre-stored correspondence between identification information.

Optionally, the information in the system background may be updated according to an on-site result respecting principle. For example, when the on-site determined result is consistent with the historical information result stored in the system background, the information remains unchanged. When the on-site determined result is inconsistent with the historical information result stored in the system background, the historical information in the system background is updated to the on-site determined result. Optionally, the historical information may be temporarily stored in a database, and an error correction person may be dispatched to the site for check.

It can be seen that the terminal device determines the position information of each port in the occupied state and the corresponding identification information of the optical fiber patch cord connected to each port, and sends the information to the system background. The system background checks and updates the connection relationship between the optical fiber patch cord and the port based on the information. The method in this application facilitates management, operation, and maintenance of optical network resources, improves efficiency of management, operation, and maintenance, and saves human resources.

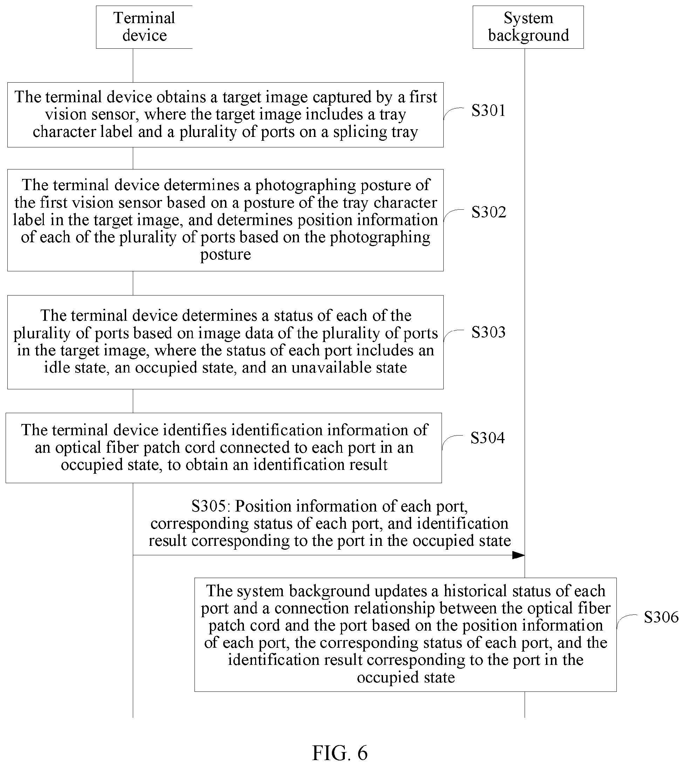

This application further provides a data processing method. FIG. 6 is a schematic flowchart of a data processing method according to this application. The method includes but is not limited to descriptions of the following content.

S301: A terminal device obtains a target image captured by a first vision sensor, where the target image includes a tray character label and a plurality of ports on a splicing tray.

In this embodiment, some ports of the ports on the splicing tray are connected to optical fiber patch cords, and identification information is set on the optical fiber patch cords. For content such as what the identification information is, how the identification information is set on the optical fiber patch cord, and how the optical fiber patch cord is connected to the port of the splicing tray, refer to the descriptions of related content in step S201 in the method embodiment in FIG. 4. Details are not described herein again.

S302: The terminal device determines a photographing posture of the first vision sensor based on a posture of the tray character label in the target image, and determines position information of each of the plurality of ports based on the photographing posture.

S303: The terminal device determines a status of each of the plurality of ports based on image data of the plurality of ports in the target image, where the status of each port includes an idle state, an occupied state, and an unavailable state.

For steps S302 and S303, refer to the descriptions in steps S102 and S103 in the method embodiment in FIG. 2. For brevity of this specification, details are not described herein again.

S304: The terminal device identifies identification information of an optical fiber patch cord connected to each port in an occupied state, to obtain an identification result.

S305: The terminal device sends the position information of each port, the corresponding status of each port, and the identification result corresponding to the port in the occupied state to a system background.

For steps S304 and S305, refer to the descriptions in steps S204 and S205 in the method embodiment in FIG. 4. For brevity of this specification, details are not described herein again.

S306: The system background updates a historical status of each port and a connection relationship between the optical fiber patch cord and the port based on the position information of each port, the corresponding status of each port, and the identification result corresponding to the port in the occupied state.

For updating the historical status of each port based on the position information of each port and the corresponding status of each port by the system background, refer to the descriptions of the content in step S105 in the method embodiment in FIG. 2. For updating the connection relationship between the optical fiber patch cord and the port based on the position information of the occupied state and the identification result corresponding to each port by the system background, refer to the descriptions of the content in step S206 in the method embodiment in FIG. 4.

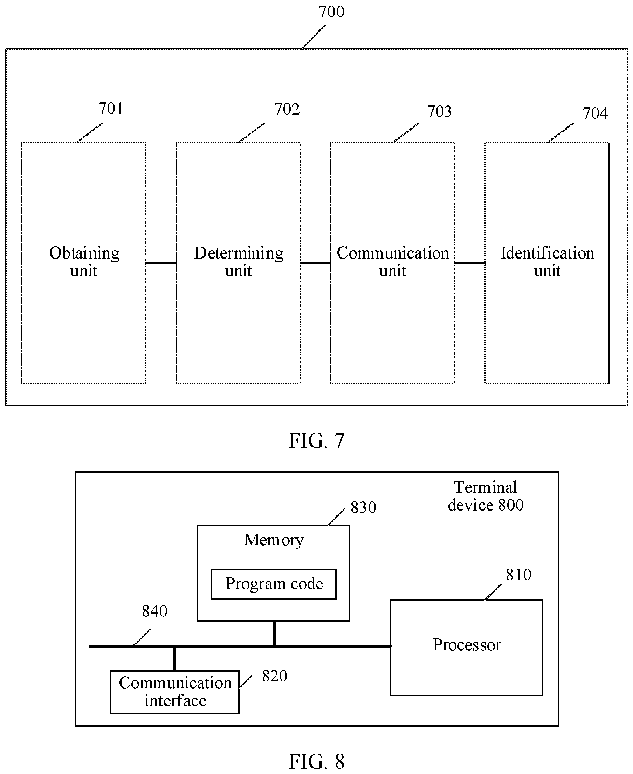

FIG. 7 is a diagram of a structure of a data processing apparatus 700 according to this application. The apparatus 700 may be configured as the terminal device in the system in FIG. 1, or may be configured as the terminal device in the method embodiment in FIG. 2, FIG. 4, or FIG. 6. The apparatus 700 includes:
an obtaining unit 701, configured to obtain a target image captured by a first vision sensor, where the target image includes a tray character label and a plurality of ports on a splicing tray;
a determining unit 702, configured to: determine a photographing posture of the first vision sensor based on a posture of the tray character label in the target image, and determine position information of each of the plurality of ports based on the photographing posture;
the determining unit 702, further configured to determine a status of each of the plurality of ports based on image data of the plurality of ports in the target image; and
a communication unit 703, configured to send the position information of each of the plurality of ports and the corresponding status of each port to a system background, so that the system background updates historical statuses of the plurality of ports based on the position information of the plurality of ports and the statuses of the plurality of ports.

In a possible implementation, the photographing posture includes a photographing height, a photographing distance, and a photographing direction of the first vision sensor, and the posture of the tray character label includes at least a position, a size, and a shape of the tray character label.

In a possible implementation, the determining unit 702 is configured to input the target image into a trained prediction model, to obtain the statuses of the plurality of ports. The prediction model is obtained through training based on a large quantity of image samples, the image sample includes at least one port and a label of each of the at least one port, and the label is used to mark a status of the port.

In a possible implementation, the plurality of ports include any one or a combination of ports included in one or more rows on the splicing tray, ports included in one or more columns on the splicing tray, and all ports on the splicing tray.

In a possible implementation, the status of each port in the plurality ports includes an idle state, an occupied state, and an unavailable state. The unavailable state of the port means that a flange that is of the port and that is configured to connect to an optical fiber patch cord falls off, the idle state of the port means that the flange of the port does not fall off and is not connected to the optical fiber patch cord, and the occupied state of the port means that the flange of the port is connected to the optical fiber patch cord.

In a possible implementation, identification information is set at both ends of the optical fiber patch cord, and a correspondence exists between the identification information at both ends of the same optical fiber patch cord; and when a port in an occupied state exists in the plurality of ports, the target image includes identification information of one end or both ends of an optical fiber patch cord connected to the port in the occupied state. The communication unit 703 is further configured to send, to the system background, position information of the port in the occupied state in the plurality of ports and the identification information of the end of the optical fiber patch cord connected to the port in the occupied state, so that the system background determines a connection relationship between the optical fiber patch cord and the port based on a pre-stored correspondence between the identification information.

In a possible implementation, the identification information includes any one or a combination of a two-dimensional code, a bar code, a specific character, and a specific pattern.

In a possible implementation, the apparatus 700 further includes an identification unit 704.

The identification unit 704 is configured to identify the identification information of the end of the optical fiber patch cord connected to the port in the occupied state, to obtain an identification result.

The communication unit 703 is configured to send the position information of the port in the occupied state and the identification result to the system background, so that the system background determines the connection relationship between the optical fiber patch cord and the port based on the pre-stored correspondence between the identification information.

The functional modules in FIG. 7 are configured to implement the steps performed by the terminal device in the method embodiment in FIG. 2, FIG. 4, or FIG. 6. For details, refer to the descriptions of related content in the method embodiment in FIG. 2, FIG. 4, or FIG. 6. For brevity of this specification, details are not described herein again.

This application further provides a terminal device 800. The terminal device 800 may be configured as the terminal device in the method embodiment in FIG. 2, FIG. 4, or FIG. 6. FIG. 8 is a diagram of a structure of the terminal device 800 according to this application. The terminal device 800 includes a processor 810, a communication interface 820, and a memory 830. The processor 810, the communication interface 820, and the memory 830 may be connected to each other through an internal bus 840, or may implement communication in another manner like wireless transmission.

For example, the bus 840 is used for connection. The bus 840 may be a peripheral component interconnect (peripheral component interconnect, PCI) bus, an industry standard architecture (extended industry standard architecture, EISA) bus, or the like. The bus 840 may be classified into an address bus, a data bus, a control bus, and the like. For ease of representation, only one bold line is used for representing the bus in FIG. 8, but this does not represent that there is only one bus or only one type of bus.

The processor 810 may include at least one general-purpose processor, for example, a CPU, or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The processor 810 executes various types of digital storage instructions, for example, software or a firmware program stored in the memory 830, so that the terminal device 800 can provide a wide range of services.

The memory 830 is configured to store program code, and the processor 810 controls execution of the program code, to perform the steps in the embodiment in FIG. 2, FIG. 4, or FIG. 6. For details, refer to related descriptions in the foregoing embodiments. Details are not described herein again.

The memory 830 may include a volatile memory, for example, a RAM. The memory 830 may alternatively include a nonvolatile memory, for example, a ROM or a flash memory (flash memory). The memory 830 may alternatively include a combination of the foregoing types.

The communication interface 820 may be a wired interface (for example, an Ethernet interface), may be an internal interface (for example, a high-speed serial computer extension bus (peripheral component interconnect express, PCIE) bus interface), the wired interface (for example, the Ethernet interface), or a wireless interface (for example, a cellular network interface or a wireless local area network interface), and is configured to communicate with another device or module.

The processor 810, the communication interface 820, and the like in the terminal device 800 may implement functions of the devices in the foregoing method embodiments and/or various steps and methods implemented by the devices. For brevity, details are not described herein again.

When the terminal device 800 is configured as a terminal device, the communication unit 703 in the data processing apparatus 700 may be located in the communication interface 820 in the terminal device 800, and the obtaining unit 701, the determining unit 702, and the identification unit 704 in the data processing apparatus 700 may be located in the processor 810 in the terminal device 800.

Optionally, the terminal device 800 may further include a user interaction interface or a display (not shown in the figure). Optionally, the user interaction interface or the display is used for interaction between a user and the terminal device 800, and the user interaction interface or the display is further configured to display an image or information. For example, the terminal device 800 displays the target image through the user interaction interface or the display, or the terminal device 800 prompts, on the user interaction interface or the display, the user how to perform adjustment to obtain a better target image.

It should be noted that FIG. 8 is only a possible implementation of embodiments of this application. In practice, the terminal device 800 may further include more or fewer components. This is not limited herein. For content that is not shown or described in embodiments of this application, refer to related descriptions in the foregoing method embodiments. Details are not described herein again.

This application further provides a computer-readable storage medium, including computer program instructions. When the computer program instructions are executed by a computer, the computer performs some or all of the steps described in the foregoing data processing method embodiments.

This application further provides a computer program product, including program instructions. When the program instructions are run on a computer, the computer is enabled to perform some or all of the steps described in the foregoing data processing method embodiments.

In the foregoing embodiments, the descriptions of embodiments have respective focuses. For a part that is not described in detail in an embodiment, refer to related descriptions in other embodiments.

All or some of the foregoing embodiments may be implemented by using software, hardware, or any combination thereof. When software is used to implement the embodiments, all or a part of the embodiments may be implemented in a form of a computer program product. The computer program product may include code. When the computer program product is read and executed by a computer, some or all steps of the method recorded in the foregoing method embodiments may be implemented. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium, or a semiconductor medium.

Sequence adjustment, combination, or deletion may be performed on steps in the method in embodiments of this application based on an actual requirement. The units in the apparatus in embodiments of this application may be divided, combined, or deleted based on the actual requirement.

The foregoing provides detailed descriptions of embodiments of this application. The principle and implementation of this application are described herein through specific examples. The descriptions of embodiments of this application are merely provided to help understand the method and core ideas of this application. In addition, persons of ordinary skill in the art can make variations and modifications to this application in terms of the specific implementations and application scopes according to the ideas of this application. Therefore, the content of this specification shall not be construed as a limitation to this application.

## Claims

1. A data processing method, comprising:
obtaining, by a terminal device, a target image captured by a first vision sensor, wherein the target image comprises a tray character label and a plurality of ports on a splicing tray;
determining a photographing posture of the first vision sensor based on a posture of the tray character label in the target image, and determining position information of each of the plurality of ports based on the photographing posture;
determining a status of each of the plurality of ports based on image data of the plurality of ports in the target image; and
sending the position information of each of the plurality of ports and the corresponding status of each port to a system background, so that the system background updates historical statuses of the plurality of ports based on the position information of the plurality of ports and the statuses of the plurality of ports.

2. The method according to claim 1, wherein the photographing posture comprises a photographing height, a photographing distance, and a photographing direction of the first vision sensor, and the posture of the tray character label comprises at least a position, a size, and a shape of the tray character label.

3. The method according to claim 1 or 2, wherein the determining statuses of the plurality of ports in the target image based on image data of the plurality of ports in the target image comprises:
inputting the target image into a trained prediction model, to obtain the statuses of the plurality of ports, wherein the prediction model is obtained through training based on a large quantity of image samples, the image sample comprises at least one port and a label of each of the at least one port, and the label is used to mark a status of the port.

4. The method according to any one of claims 1 to 3, wherein the plurality of ports comprise any one or a combination of ports comprised in one or more rows on the splicing tray, ports comprised in one or more columns on the splicing tray, and all ports on the splicing tray.

5. The method according to any one of claims 1 to 4, wherein the status of each of the plurality of ports comprises an idle state, an occupied state, and an unavailable state, wherein the unavailable state of the port means that a flange that is of the port and that is configured to connect to an optical fiber patch cord falls off, the idle state of the port means that the flange of the port does not fall off and is not connected to the optical fiber patch cord, and the occupied state of the port means that the flange of the port is connected to the optical fiber patch cord.

6. The method according to claim 5, wherein identification information is set at both ends of the optical fiber patch cord, and a correspondence exists between the identification information at both ends of the same optical fiber patch cord; and when a port in an occupied state exists in the plurality of ports, the target image comprises identification information of one end or both ends of an optical fiber patch cord connected to the port in the occupied state; and
after the determining a status of each of the plurality of ports, the method further comprises:
sending, to the system background, position information of the port in the occupied state in the plurality of ports and the identification information of the end of the optical fiber patch cord connected to the port in the occupied state, so that the system background determines a connection relationship between the optical fiber patch cord and the port based on a pre-stored correspondence between the identification information.

7. The method according to claim 6, wherein the identification information comprises any one or a combination of a two-dimensional code, a bar code, a specific character, and a specific pattern.

8. The method according to claim 6 or 7, wherein the sending, to the system background, position information of the port in the occupied state in the plurality of ports and the identification information of the end of the optical fiber patch cord connected to the port in the occupied state comprises:
identifying the identification information of the end of the optical fiber patch cord connected to the port in the occupied state, to obtain an identification result; and
sending the position information of the port in the occupied state and the identification result to the system background, so that the system background determines the connection relationship between the optical fiber patch cord and the port based on the pre-stored correspondence between the identification information.

9. The method according to any one of claims 6 to 8, wherein a mechanical part is disposed on the optical fiber patch cord, and the mechanical part is marked with the identification information.

10. The method according to claim 9, wherein the mechanical part is plugged into a port of the optical fiber patch cord, and the optical fiber patch cord is plugged into the port of the splicing tray through the mechanical part.

11. A data processing apparatus, comprising:
an obtaining unit, configured to obtain a target image captured by a first vision sensor, wherein the target image comprises a tray character label and a plurality of ports on a splicing tray;
a determining unit, configured to: determine a photographing posture of the first vision sensor based on a posture of the tray character label in the target image, and determine position information of each of the plurality of ports based on the photographing posture;
the determining unit, further configured to determine a status of each of the plurality of ports based on image data of the plurality of ports in the target image; and
a communication unit, configured to send the position information of each of the plurality of ports and the corresponding status of each port to a system background, so that the system background updates historical statuses of the plurality of ports based on the position information of the plurality of ports and the statuses of the plurality of ports.

12. The apparatus according to claim 11, wherein the photographing posture comprises a photographing height, a photographing distance, and a photographing direction of the first vision sensor, and the posture of the tray character label comprises at least a position, a size, and a shape of the tray character label.

13. The apparatus according to claim 11 or 12, wherein the determining unit is configured to input the target image into a trained prediction model, to obtain the statuses of the plurality of ports, wherein the prediction model is obtained through training based on a large quantity of image samples, the image sample comprises at least one port and a label of each of the at least one port, and the label is used to mark a status of the port.

14. The apparatus according to any one of claims 11 to 13, wherein the plurality of ports comprise any one or a combination of ports comprised in one or more rows on the splicing tray, ports comprised in one or more columns on the splicing tray, and all ports on the splicing tray.

15. The apparatus according to any one of claims 11 to 14, wherein the status of each of the plurality of ports comprises an idle state, an occupied state, and an unavailable state, wherein the unavailable state of the port means that a flange that is of the port and that is configured to connect to an optical fiber patch cord falls off, the idle state of the port means that the flange of the port does not fall off and is not connected to the optical fiber patch cord, and the occupied state of the port means that the flange of the port is connected to the optical fiber patch cord.

16. The apparatus according to claim 15, wherein identification information is set at both ends of the optical fiber patch cord, and a correspondence exists between the identification information at both ends of the same optical fiber patch cord; and when a port in an occupied state exists in the plurality of ports, the target image comprises identification information of one end or both ends of an optical fiber patch cord connected to the port in the occupied state; and
the communication unit is further configured to:
send, to the system background, position information of the port in the occupied state in the plurality of ports and the identification information of the end of the optical fiber patch cord connected to the port in the occupied state, so that the system background determines a connection relationship between the optical fiber patch cord and the port based on a pre-stored correspondence between the identification information.

17. The apparatus according to claim 16, wherein the identification information comprises any one or a combination of a two-dimensional code, a bar code, a specific character, and a specific pattern.

18. The apparatus according to claim 16 or 17, wherein the apparatus further comprises an identification unit;
the identification unit is configured to identify the identification information of the end of the optical fiber patch cord connected to the port in the occupied state, to obtain an identification result; and
the communication unit is configured to send the position information of the port in the occupied state and the identification result to the system background, so that the system background determines the connection relationship between the optical fiber patch cord and the port based on the pre-stored correspondence between the identification information.

19. A terminal device, comprising a memory and a processor, wherein the memory is configured to store instructions, and the processor is configured to invoke the instructions stored in the memory to perform the method according to any one of claims 1 to 10.

20. A system, comprising a terminal device and a system background, wherein the terminal device is the terminal device according to any one of claims 1 to 10.

21. A computer storage medium, comprising program instructions, wherein when the program instructions are run on a computer, the computer is enabled to perform the method according to any one of claims 1 to 10.
